# EUROPÄISCHE PATENTANMELDUNG

(11) **EP 0 842 624 A1**
(43) Veröffentlichungstag der Anmeldung: **20.05.1998**
(21) Anmeldenummer: 97115861.3
(22) Anmeldetag: 12.09.1997
(51) Int. Cl.: A47J 31/06

(54) **Filtereinrichtung zur Herstellung von Aromaauszügen aus Kaffee oder Tee**

(30) Priorität: 06.11.1996 DE 29619224 U
(71) Anmelder: MELITTA HAUSHALTSPRODUKTE GmbH & Co. Kommanditgesellschaft, D-32427 Minden (DE)
(72) Erfinder: Pahl, Klaus, 32547 Bad Oeynhausen (DE); Horn, Andrea, 32423 Minden (DE)
(74) Vertreter: Stracke, Alexander, Dipl.-Ing.

(57) **Zusammenfassung**

Die Erfindung beschreibt eine Filtereinrichtung zur Herstellung von Aromaauszügen aus Kaffee oder Tee.

Ziel der Erfindung ist es, eine derartige Filtereinrichtung zu schaffen, die sich sowohl durch eine einfache Gestaltung des Filtergefäßes (10) wie auch durch die Möglichkeit der praktisch verlustfreien Fertigung von entsprechenden Filterpapiereinsätzen (13) auszeichnet.

Dies wird gemäß der vorliegenden Erfindung dadurch erreicht, daß die Projektion der nutzbaren Filterfläche des Filtergefäßes (10) - in Durchlaufrichtung gesehen - eine rechteckige Fläche ist und daß der Filterpapiereinsatz (13) entsprechend aus einem rechteckigen Blatt besteht.

## Beschreibung

Die vorliegende Erfindung betrifft eine Filtereinrichtung zur Herstellung von Aromaauszügen aus Kaffee oder Tee, umfassend ein Filtergefäß mit mindestens einer Auslauföffnung und einem in das Filtergefäß eingelegten Filterpapiereinsatz.

Filtereinrichtungen der vorerwähnten Art sind an sich bekannt.

Am weitesten verbreitet sind Filtereinrichtungen mit pyramidenartiger oder pyramidenstumpfartiger Ausbildung sowohl des Filtergefäßes wie auch des Filterpapiereinsatzes.

Es sind auch Filtereinrichtungen bekannt, bei denen das Filtergefäß eine etwa zylindrische Form mit einem ebenen Boden aufweist und bei denen entsprechend ein rundes Filterblatt zum Einsatz kommt.

Bei den bekannten Filtereinrichtungen ist in jedem Falle bei der Herstellung des Filterpapiereinsatzes mit unvermeidbarem Abfall bzw. Verschnitt zu rechnen.

Der vorliegenden Erfindung liegt die Aufgabe zugrunde, eine Filtereinrichtung der gattungsgemäßen Art zu schaffen, die sich sowohl durch eine einfache Gestaltung des Filtergefäßes selbst wie auch durch praktisch verlustfreie Fertigung von angepaßten Filterpapiereinsätzen auszeichnet.

Diese Aufgabe wird erfindungsgemäß dadurch gelöst, daß die Projektion der nutzbaren Filterfläche des Filtergefäßes - in Durchlaufrichtung gesehen - eine rechteckige Fläche ist und daß der Filterpapiereinsatz entsprechend aus einem rechteckigen Blatt besteht.

Ein Filtergefäß mit einer in der Projektion gesehen rechteckigen Filter-Fläche ist ein vergleichsweise geometrisch einfaches und somit letztendlich auch preiswert herstellbares Gebilde. Der besondere Vorteil der Erfindung liegt darin, daß als Filterpapiereinsatz für das Filtergefäß lediglich ein rechteckiges Blatt aus Filterpapier benötigt wird, welches praktisch verlustfrei aus einer größeren Papierbahn geschnitten werden kann.

Weitere Merkmale der Erfindung sind Gegenstand von Unteransprüchen.

Ausführungsbeispiele der Erfindung sind in den beigefügten Zeichnungen dargestellt und werden im folgenden näher beschrieben.

Es zeigen:
- Figur 1: eine perspektivische Darstellung eines Filtergefäßes einer erfindungsgemäßen Filtereinrichtung, Figur 2 eine perspektivische Darstellung eines Filtergefäßes einer Filtereinrichtung nach einem weiteren Ausführungsbeispiel der Erfindung,
- Figur 3: eine perspektivische Darstellung einer mehrteiligen, erfindungsgemäßen Filtereinrichtung nach Art eines Sprengbildes,
- Figur 4: eine der Figur 3 entsprechende Darstellung eines weiteren Ausführungsbeispieles der Erfindung,
- Figur 5: eine perspektivische Darstellung eines Niederhalters einer im übrigen etwa dem Ausführungsbeispiel gemäß Figur 4 entsprechenden Filtereinrichtung,
- Figur 6: eine perspektivische Darstellung einer weiteren, im wesentlichen dem Ausführungsbeispiel nach Figur 3 entsprechenden Filtereinrichtung,
- Figur 7: eine perspektivische Darstellung einer erfindungsgemäßen Filtereinrichtung, gezeigt in der Phase des Einbringens eines Filterpapiereinsatzes,
- Figur 8: eine perspektivische Darstellung der Filtereinrichtung gemäß Figur 7 im Gebrauchszustand.

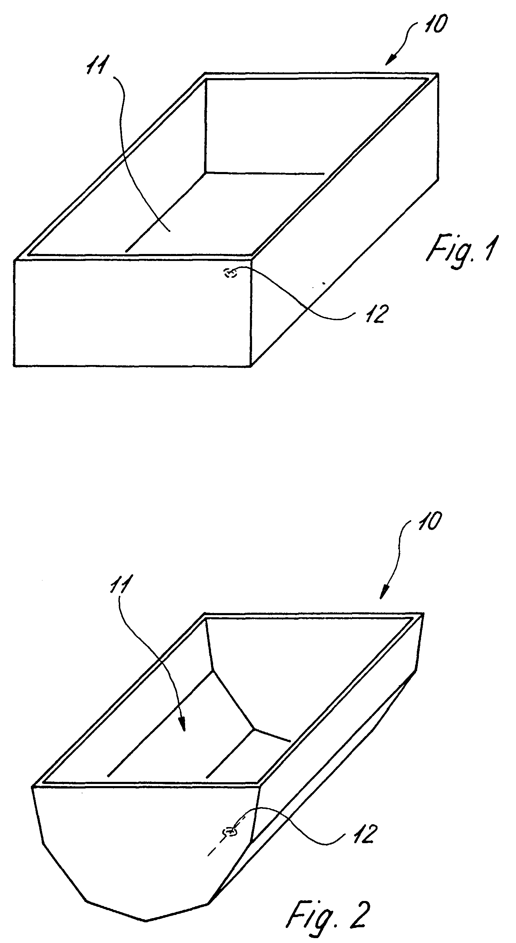

In Figur 1 ist mit dem Bezugszeichen 10 ein Filtergefäß einer Filtereinrichtung zur Herstellung von Aromaauszügen aus Kaffee oder Tee bezeichnet, welches die Form eines quaderförmigen Kastens aufweist.

Im Boden 11 des Filtergefäßes 10 ist eine Auslauföffnung 12 für das Filtrat vorgesehen.

In das Filtergefäß 10 wird ein in Figur 1 nicht dargestellter Filterpapiereinsatz engelegt, dessen Grundfläche der Fläche des Bodens 11 entspricht.

Da das Filtergefäß 10 gemäß Figur 1 quaderförmig ausgebildet ist, weist der Boden 11 entsprechend eine rechteckige Grundfäche auf, das Gleiche gilt dann entsprechend für einen Filterpapiereinsatz.

In Figur 2 ist ein weiteres Filtergefäß 10 einer Filtereinrichtung dargestellt, welches sich vom Ausführungsbeispiel gemäß Figur 1 dadurch unterscheidet, daß dieses Filtergefäß 10 rinnen- oder trogförmig ausgebildet ist.

An der tiefsten Stelle des Bodens 11 befindet sich wiederum eine Auslauföffnung 12 für das fertige Filtrat.

Auch beim Ausführungsbeispiel gemäß Figur 2 ist die Projektion der nutzbaren Filterfläche des Filtergefäßes 10 - in Durchlaufrichtung des Filtrates gesehen - eine rechteckige Fläche. Somit kann auch beim Filtergefäß 10 nach Figur 2 ein Filterpapiereinsatz mit rechteckiger Fläche verwendet werden.

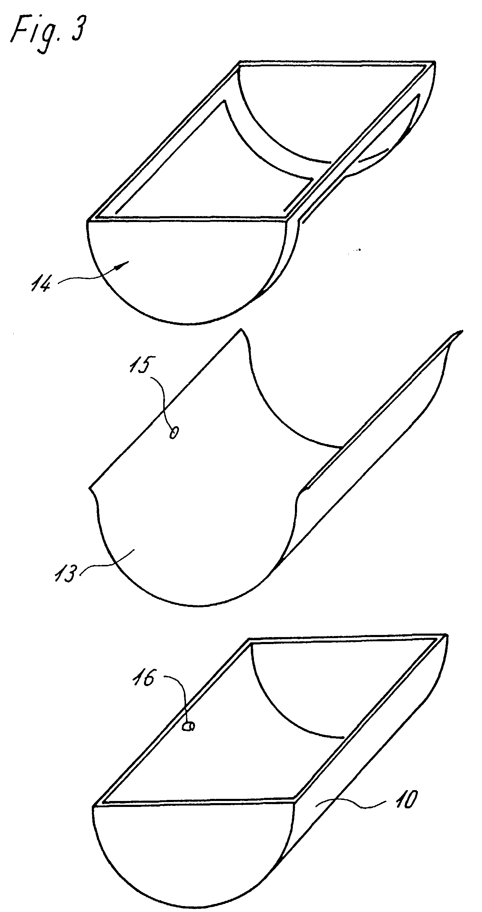

In Figur 3 ist ein Ausführungsbeispiel der Erfindung gezeigt, bei dem das Filtergefäß 10 wiederum rinnen- oder trogförmig ausgebildet ist, und zwar im Querschnitt etwa halbkreisförmig. Auch hier kann ein in der Grundfläche rechteckiger Filterpapiereinsatz 13 verwendet werden, der durch einen der Querschnittsform des rinnen- oder trogförmigen Filtergefäßes 10 angepaßten Niederhalter 14 in seiner Lage innerhalb des Filtergefäßes 10 fixiert werden kann.

Um das lagegerechte Einsetzen des Filterpapiereinsatzes 13 in das Filtergefäß 10 zu erleichtern, kann der Filterpapiereinsatz 13 im Seitenrandbereich mit einer Arretierungsöffnung 15 und das Filtergefäß 10 entsprechend mit einem Arretierungsnocken 16 versehen sein.

Auch beim Ausführungsbeispiel gemäß Figur 3 ist die Projektion der nutzbaren Filterfläche des Filtergefäßes 10 eine rechteckige Fläche.

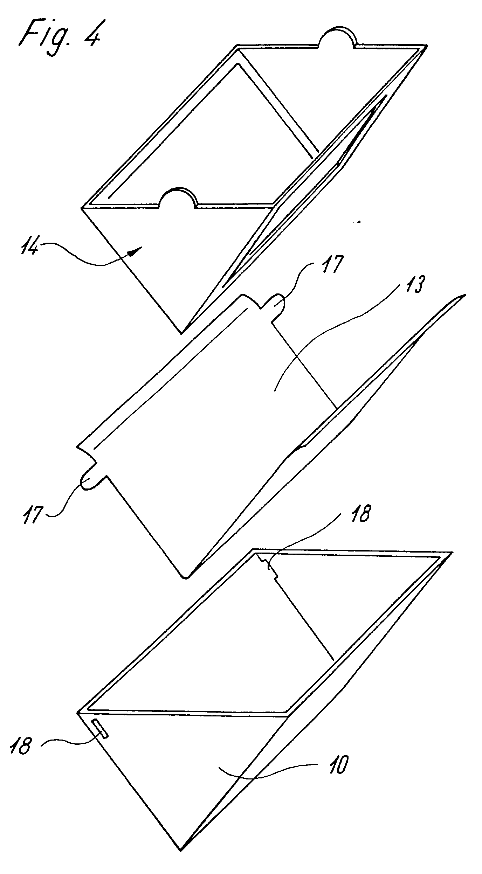

Das Gleiche gilt für die Filtereinrichtung gemäß Figur 4, wobei hier die Querschnittsform des Filtergefäßes 10 dreieckig gewählt ist.

Weiterhin zeigt Figur 4 eine weitere Möglichkeit, wie ein Filterpapiereinsatz 13 innerhalb des Filtergefäßes 10 lagegerecht vorfixierbar ist. Der Filterpapiereinsatz 13 weist an zwei gegenüberliegenden Stirnkanten vorstehende Arretierungslaschen 17 auf. Diese Arretierungslaschen 17 werden in dafür vorgesehene Öffnungen 18 im Stirnwandbereich des Filtergefäßes 10 eingesetzt. Dadurch ist der Filterpapiereinatz 13 im Filtergefäß 10 lagegerecht vorfixiert und durch einen dem Querschnitt des Filtergefäßes 10 angepaßten Niederhalter 14 kann dann der Filterpapiereinsatz 13 insgesamt innerhalb des Filtergefäßes 10 gesichert werden.

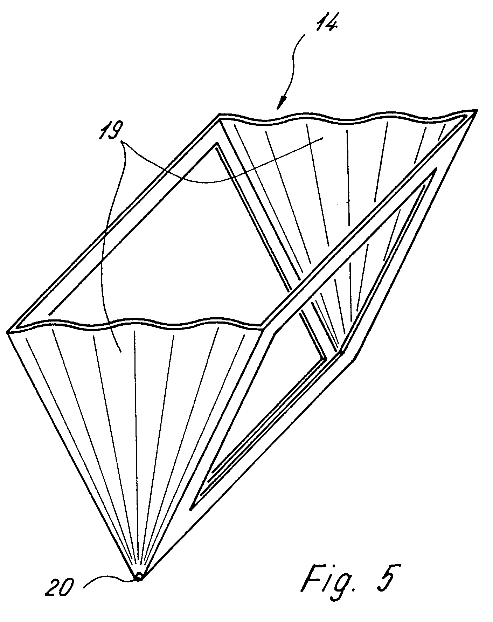

Figur 5 zeigt eine Variante eines Niederhalters 14 für ein Filtergefäß 10 gemäß dem Ausführungsbeispiel nach Figur 4.

Der Niederhalter 14 gemäß dem Ausführungsbeispiel nach Figur 5 ist mit flexiblen Stirnwänden 19 ausgestattet und die untere, spitze Kante 20 dieses Niederhalters 14 ist als Scharnier, vorzugsweise als Filmscharnier ausgebildet.

Dadurch besteht die Möglichkeit, den Niederhalter 14 mehr oder weniger weit zusammenzuklappen oder aufzufalten. Das Einsetzen des Niederhalters 14 in ein Filtergefäß 10 bzw. das Entnehmen des Niederhalters 14 aus dem Filtergefäß 10 wird hierdurch erleichtert, außerdem kann ein derart flexibler Niederhalter 14 unter Umständen für verschiedene Filtergefäße mit unterschiedlichen Öffnungswinkeln verwendet werden.

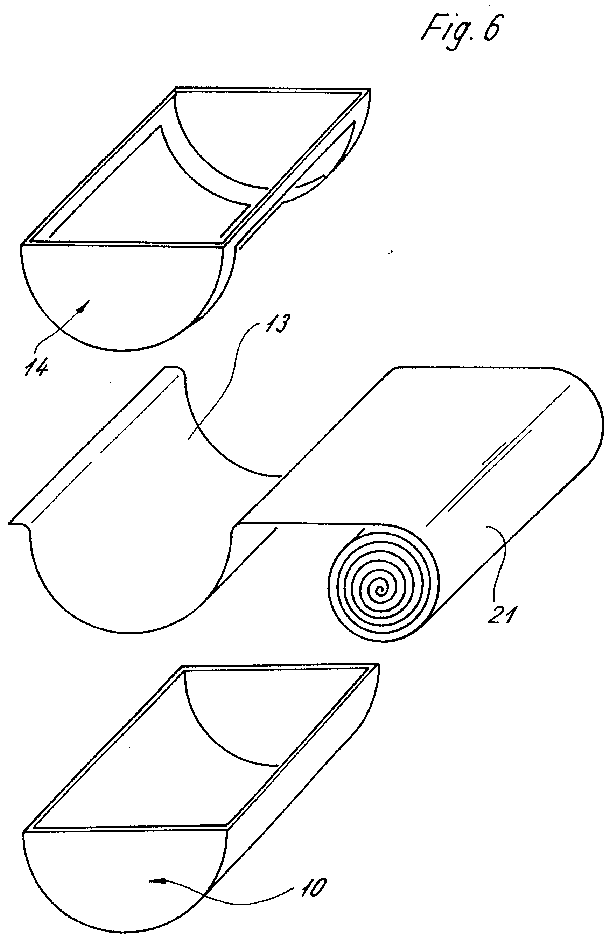

Bei dem Ausführungsbeispiel der Erfindung gemäß Figur 6 ist als besonders bedeutsam hervorzuheben, daß hier ein Filterpapiereinsatz 13 verwendet wird, der ein Abschnitt einer Endlosrolle 21 ist. Diese Endlosrolle 21 kann auf einem nicht dargestellten Rollenträger einer Kaffee- oder Teemaschine gelagert sein, so daß bei jedem Prüfvorgang lediglich ein entsprechender Filterpapiereinsatz 13 von dieser Endlosrolle 21 abgerollte zu werden braucht, es ist aber auch denkbar, daß der Endverbraucher vor jedem Prüfvorgang von einer anderweitig aufbewahrten Endlosrolle einen entsprechenden Filterpapiereinsatz 13 abreißt.

Ansonsten ist auch hier das Filtergefäß 10 wieder rinnen- oder trogförmig ausgebildet und weist einen etwa halbkreisförmigen Querschnitt auf. Das Gleiche gilt für den in Figur 6 gezeigten Niederhalter 14.

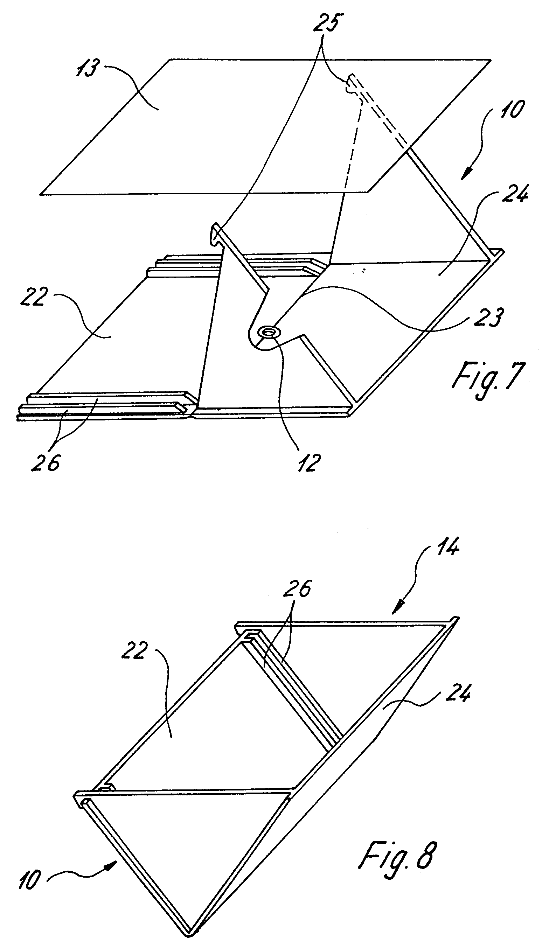

Die Figuren 7 und 8 zeigen wiederum ein Filtergefäß 10 mit einem trogförmigen Aufbau in dreieckigem Querschnitt. Die Besonderheit dieses Filtergefäßes 10 liegt darin, daß eine Wandung 22 längs eines Filmscharnieres 23 im Bereich der unteren Kante des Filtergefäßes 22 anklappbar ist bis in eine Ebene mit der gegenüberliegenden Seitenwandung 24. Diese Position ist in Figur 7 dargestellt und macht deutlich, daß sich in dieser Lage ein Filterpapiereinsatz 13 besonders einfach in das Filtergefäß 14 einbringen läßt. Das Filtergefäß 14 wird dann durch Anklappen der Seitenwandung 22 in seine Gebrauchsposition gemäß Figur 8 gebracht, wobei die Lage der Seitenwandung 22 durch Rastnasen 25, die die obere Kante der Seitenwandung 22 hintergreifen, gesichert wird.

Es ist selbstverständlich, daß alle Filtergefäße 10, auch wenn dies in den Figuren nicht besonders hervorgehoben worden ist, mit Stützrippen 26 zur Abstützung des Filterpapiereinsatzes 13 versehen sein können, so wie dies in den Figuren 7 und 8 dargestellt ist.

Der Vorteil aller in den Zeichnungen dargestellten Filtereinrichtungen besteht in der einfachen Form des Filtergefäßes 10 sowie in der entsprechend geometrisch einfachen Form des Filterpapiereinsatzes 13, wobei besonders hervorzuheben ist, daß der Filterpapiereinsatz 13 aufgrund seiner rechteckigen Grundform praktisch verlustfrei aus einer entsprechend großen Bahn eines Fiterpapieres hergestellt werden kann.

Das Filtergefäß 10 einer erfindungsgemäßen Filtereinrichtung kann aus allen für Filtereinrichtungen geeigneten Materialien hergestellt sein, insbesondere aus Kunststoff, und im Falle seiner einstückigen Ausbildung selbstverständlich auch aus Glas oder Metall.

## Patentansprüche

1. Filtereinrichtung zur Herstellung von Aromaauszügen aus Kaffee oder Tee, umfassend ein Filtergefäß mit mindestens einer Auslauföffnung und einem in das Filtergefäß eingelegten Filterpapiereisatz, **dadurch gekennzeichnet, daß** die Projektion der nutzbaren Filterfläche des Filtergefäßes (10) - in Durchlaufrichtung gesehen - eine rechteckige Fläche ist und daß der Filterpapiereinsatz (13) entsprechend aus einem rechteckigen Blatt besteht.

2. Filtereinrichtung nach Anspruch 1, **dadurch gekennzeichnet, daß** das Filtergefäß (10) die Form eines quaderförmigen Kastens aufweist.

3. Filtereinrichtung nach Anspruch 1, **dadurch gekennzeichnet, daß** das Filtergefäß (10) die Form einer Rinne oder eines Troges aufweist.

4. Filtereinrichtung nach einem oder mehreren der vorhergehenden Ansprüche, **dadurch gekennzeichnet, daß** das Filtergefäß (10) sowie der Filterpapiereinsatz (13) miteinander korrespondierende Mittel zur Lagefixierung des Filterpapiereinsatzes (13) innerhalb des Filtergefäßes (10) aufweisen.

5. Filtereinrichtung nach Anspruch 4, **dadurch gekennzeichnet, daß** das Filtergefäß (10) mit einem oder mehreren Arretierungsnocken (16) und der Filterpapiereinsatz (13) mit einer entsprechenden Anzahl von Arretierungsöffnungen (15) ausgestattet sind.

6. Filtereinrichtung nach Anspruch 5, **dadurch gekennzeichnet, daß** das Filtergefäß (10) im Bereich seiner stirnseitigen Wandungen mit Öffnungen (18) zur Aufnahme von Arretierungslaschen (17) im Bereich der Stirnkanten des Filterpapiereinsatzes (13) ausgestattet ist.

7. Filtereinrichtung nach einem oder mehreren der vorhergehenden Ansprüche, **dadurch gekennzeichnet, daß** der Filterpapiereinsatz (13) innerhalb des Filtergefäßes (10) durch einen der Querschnittsformen des Filtergefäßes (10) angepaßten Niederhalter (14) fixiert ist.

8. Filtereinrichtung nach Anspruch 7, **dadurch gekennzeichnet, daß** der Niederhalter (14) mit flexiblen Stirnwänden (19) ausgestattet ist.

9. Filtereinrichtung nach einem oder mehreren der vorhergehenden Ansprüche, **dadurch gekennzeichnet, daß** das Filtergefäß (10) eine dreieckige Querschnittsform aufweist und daß eine Seitenwandung (22) des Filtergefäßes (10) längs eines Filmscharnieres (23) im unteren Längskantenbereich gegenüber der benachbarten Seitenwandung (24) abklappbar und in seiner geschlossenen Gebrauchsstellung durch an den Stirnwandungen angeformte Rastnasen (25) fixiert ist.

10. Filtereinrichtung nach einem oder mehreren der vorhergehenden Ansprüche, **dadurch gekennzeichnet, daß** die Auflagefläche des Filtergefäßes (10), auf dem der Filterpapiereinsatz (13) aufliegt, mit Stützrippen (26) versehen ist.
